Europäisches Patentamt

European Patent Office

Office européen des brevets

(11) Veröffentlichungsnummer: **0 117 913**
**B1**

# EUROPÄISCHE PATENTSCHRIFT

(45) Veröffentlichungstag der Patentschrift:
**20.04.88**

(21) Anmeldenummer: **83112346.8**

(22) Anmeldetag: **08.12.83**

(51) Int. Cl.⁴: **F 02 F 3/04,** F 02 F 3/00,
F 02 F 3/08, F 02 F 3/16

(54) **Mehrteiliger flüssigkeitsgekühlter Kolben für Verbrennungsmotoren.**

(30) Priorität: **05.02.83 DE 3303984**

(43) Veröffentlichungstag der Anmeldung:
**12.09.84 Patentblatt 84/37**

(45) Bekanntmachung des Hinweises auf die Patenterteilung:
**20.04.88 Patentblatt 88/16**

(84) Benannte Vertragsstaaten:
**CH FR GB IT LI**

(56) Entgegenhaltungen:
**DE - A - 2 151 869**
**DE - A - 2 832 970**
**DE - B - 1 253 514**

**Machinery's Handbook, 20th Ed., 1978, Industrial Press Inc. New York, page 2269**

(73) Patentinhaber: **MAHLE GMBH,**
**Pragstrasse 26-46 Postfach 50 07 69,**
**D-7000 Stuttgart 50 (DE)**

(72) Erfinder: **Jüngling, Kurt, Wettenhartstrasse 8/I,**
**D-7302 Ostfildern (DE)**

(74) Vertreter: **Pfusch, Volker, Dipl.-Ing., MAHLE GMBH**
**Patentabteilung Pragstrasse 26-46 Postfach 50 07 69,**
**D-7000 Stuttgart 50 (DE)**

## Beschreibung

Die Erfindung betrifft einen mehrteiligen flüssigkeitsgekühlten Kolben nach dem Oberbegriff des Patentanspruchs.

Ein derartiger Kolben ist bekannt aus der DE-B-1 253 514. Das dort zwischen Ober- und Unterteil des Kolbens eingebaute Zwischenstück hat im wesentlichen die Aufgabe, einerseits in Zusammenwirkung mit dem Kolbenboden Kühlkanäle zu bilden und andererseits den Kolbenboden axial gegen den Verbrennungsdruck abzustützen.

Ein weiterer mehrteiliger Kolben mit einem Zwischenstück zwischen Ober- und Unterteil ist aus der DE-A-2 832 970 bekannt. Das Zwischenstück ist dort ein Zwischenring, der bei Verwendung eines Unterteiles aus Aluminium auf dieses aufgesetzt wird und aus einem verschleissfesteren Material als Aluminium ist, um die von dem aufliegenden Oberteil ausgehenden Relativbewegungen auf diesen Zwischenring und nicht auf das Aluminiummaterial wirken zu lassen. Wenn hier auf den Zwischenring verzichtet wird, bedeutet dies nur, dass das Oberteil in jenem Bereich direkt an dem Aluminium-Unterteil anliegt und damit der andernfalls erreichbare Verschleissschutz nicht mehr gegeben ist.

Bei einem mehrteiligen Kolben in dem Aufbau nach der DE-A-2 832 970 mit oder ohne Zwischenring kommt es bei einer Erwärmung des Kolbenbodens zu einer im Stand der Technik seit langem bekannten Aufwölbung des Kolbenbodens. Diese Aufwölbung rührt daher, dass der Kolbenboden sich an seinem äusseren heissen Ende radial auszudehen versucht, während der weniger warme die Ringnuten enthaltende Mantelbereich des Kolbenbodens sich aufgrund seiner niedrigeren Temperatur weniger stark radial ausdehnt und damit eine freie Ausdehnung des oberen Kolbenbodenendes verhindert. Die unterschiedliche radiale Ausdehnung über die Höhe des Kolbenbodens mit angeformtem Ringnutenbereich führt insbesondere in der ersten Ringnut zu einer im Radialschnitt trapezförmigen Verformung des rechteckigen Ringnutquerschnittes. Man spricht hierbei auch von einem sogenannten radial aussen erfolgenden Einschnappen der Ringnutflanken insbesondere der ersten Ringnut.

Ein solches Einschnappen vor allem der ersten Ringnut zu vermeiden, ist die Aufgabe der vorliegenden Erfindung.

Gelöst wird sie durch die Ausbildung des zwischen Kolbenober- und Unterteil vorzusehenden Zwischenstückes nach dem kennzeichnenden Merkmal des Anspruchs 1.

Indem das Zwischenstück aus einem Material mit höherem Ausdehnungskoeffizienten gefertigt ist als derjenige des Kolbenbodens sorgt das Zwischenstück bei vorgegebener radialer Anlage des Zwischenstückes in dem Mantelbereich hinter der ersten Ringnut dafür, dass der die Ringnut aufnehmende Mantel dort radial nach aussen gedrückt wird. Dies hat zur Folge, dass ein Einschnappen der Ringnut auf diese Weise vermieden werden kann.

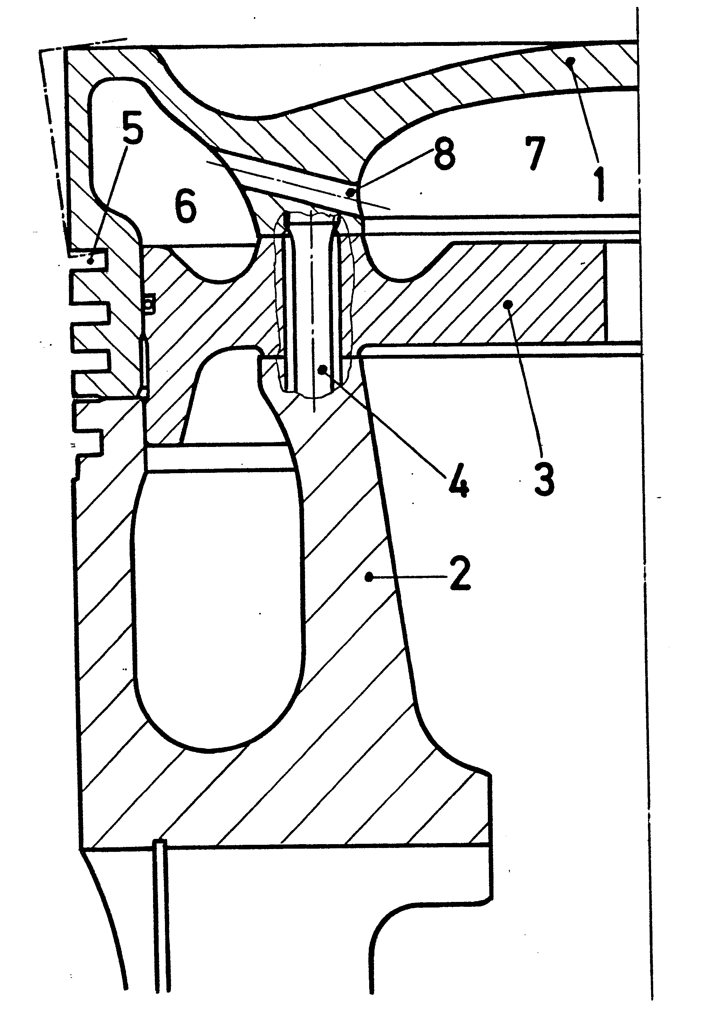

Ein Ausführungsbeispiel ist in der Zeichnung dargestellt, die einen Längsschnitt durch einen erfindungsgemässen mehrteiligen Kolben darstellt.

Das den Kolbenboden bildende Kolbenoberteil 1 ist aus Stahl und das Kolbenunterteil 2 ist aus Kugelgraphit-Grauguss. Das Zwischenstück 3 ist aus Aluminium. Die Verbindung zwischen Kolbenober- und Unterteil erfolgt durch an dem Ober- und Unterteil angreifende das Zwischenstück 3 durchdringende Dehnschrauben 4. Die gegenseitige Zentrierung von Kolbenober- und Unterteil erfolgt mit Hilfe des gegenüber beiden Teilen fest fixierten Zwischenstückes 3. Das aus Aluminium bestehende Zwischenstück 3, das damit gegenüber dem Kolbenboden 1 aus Stahl einen höheren Ausdehnungskoeffizienten aufweist, drückt den Mantel des Kolbenbodens im Bereich der ersten Nut 5 derart nach aussen, dass ein Einschnappen dieser Nut praktisch vollständig vermieden wird.

Die Verformung, die üblicherweise im Bereich der ersten Ringnut 5 auftritt, wenn ein Zwischenring nicht verwendet wird oder wenn ein solcher nicht aus einem Material mit höherem Ausdehnungskoeffizienten als demjenigen des Kolbenbodens hergestellt ist, zeigt der strichpunktierte Linienzug. Die Darstellung durch den strichpunktierten Linienzug ist selbstverständlich zur Verdeutlichung massstäblich stark übertrieben gezeichnet. Der dargestellte Kolben ist ölgekühlt und weist oberhalb des Zwischenstückes 3 aussen einen Kühlkanal 6 und innen einen weiteren Kühlraum 7 auf, wobei der Kühlkanal 6 und der Kühlraum 7 durch Bohrungen 8 im Kolbenboden 1 miteinander in Verbindung stehen. Das Zwischenstück 3 dient für die beiden Kühlräume jeweils als eine untere Begrenzungswand.

## Patentanspruch

Mehrteiliger flüssigkeitsgekühlter Kolben mit einem den Boden zumindest einen Teil des Ringnutenbereiches bildenden Kolbenoberteil (1) und einem Kolbenunterteil (2) als Kolbenschaft, wobei der im Oberteil liegende Ringnutenbereich mit insbesondere der ersten Ringnut (5) sich ringmantelförmig an den Kolbenboden anschliesst und bei dem Ober- (1) und Unterteil (2), zwischen denen ein radial und axial an diesen anliegendes zumindest den Bereich hinter der ersten Kolbenringnut (5) abdeckendes Zwischenstück (3) angeordnet ist, durch zumindest im wesentlichen axial verlaufende Dehnschrauben (4) miteinander in Verbindung stehen, gekennzeichnet durch die Merkmale:

a) der Ausdehnungskoeffizient des Materials des Zwischenstückes (3) ist grösser als derjenige des Materials des Kolbenoberteils (1),

b) das Zwischenstück (3) liegt an dem Kolbenoberteil (1) radial ausschliesslich an dessen Ringnutenbereich an und drückt den Mantel des Kolbenoberteils (1) im Bereich der ersten Kolbenringnut (5) nach aussen.

## Claim

Multi-part, liquid-cooled piston, comprising a piston upper part (1), constituting the base and at least a portion of the annular groove region, and a piston lower part (2) as piston shank, wherein the annular groove region situated in the upper part and comprising especially the first annular groove (5) adjoins the piston base in the form of an annular outer wall and wherein the upper part (1) and lower part (2), between which an intermediate piece (3) bearing radially and axially against these parts and covering at least the region behind the first piston annular groove (5) is disposed, are connected to each other by expansion bolts (4) extending at least substantially axially, characterized by the features:

a) the coefficient of expansion of the material of the intermediate piece (3) is greater than that of the material of the piston upper part (1),

b) the intermediate piece (3) bears radially against the piston upper part (1) exclusively against its annular groove region and presses the outer wall of the piston upper part (1) outwards in the region of the first piston annular groove (5).

## Revendication

Piston en plusieurs parties refroidi par un liquide, comportant une partie supérieure (1), ou tête de piston formant au moins une partie de la zone de gorges annulaires et une partie inférieure (2) formant corps de piston, la zone de gorges annulaires se trouvant dans la partie supérieure, avec en particulier la première gorge annulaire (5) qui se raccorde en forme de jupe annulaire à la tête de piston, et une pièce intermédiaire (3) disposée au voisinage des parties supérieure (1) et inférieure (2), entre ces dernières et en appui radial et axial contre elles, couvrant au moins la zone situèe derrière la première gorge (5) annulaire, reliées entre elles par des vis à expansion (4) disposées au moins essentiellement dans le sens axial, caractérisé par le fait que

a) le coefficient de dilatation du matériau de la pièce intermédiaire (3) est plus élevé que celui du matériau de la partie supérieure (1) du piston,

b) la pièce intermédiaire (3) s'appuie radialement sur la pièce supérieure (1) de piston exclusivement contre la zone de gorges annulaires de ce dernier, de manière à pousser vers l'extérieur la jupe de la partie supérieure (1) du piston dans la zone de la première gorge annulaire (5).